# EUROPÄISCHE PATENTSCHRIFT

(11) **EP 1 076 185 B1**
(45) Veröffentlichungstag und Bekanntmachung des Hinweises auf die Patenterteilung: **13.06.2007**
(21) Anmeldenummer: 00810636.1
(22) Anmeldetag: 18.07.2000
(51) Int. Cl.: F16B 25/10, F16B 33/02

(54) **Schraubanker**
Anchoring bolt
Boulon d'ancrage

(30) Priorität: 13.08.1999 DE 19938363
(43) Veröffentlichungstag der Anmeldung: 14.02.2001
(73) Patentinhaber: HILTI Aktiengesellschaft, 9494 Schaan (LI)
(72) Erfinder: Keller, Kai-Uwe, 6800 Feldkirch-Tisis (AT); Marcel, John, 9475 Sevelen (CH); Wieser, Jürgen, 86916 Kaufering (DE)
(74) Vertreter: Wildi, Roland

(56) Entgegenhaltungen:
- US-A- 2 278 377
- US-A- 3 799 229
- US-A- 4 936 395
- US-A- 5 188 496

## Beschreibung

Die Erfindung betrifft einen gewindeformenden Schraubanker, insbesondere einen gewindeformenden Betonanker, gemäss dem Oberbegriff des Patentanspruchs 1.

Zur Befestigung von Bauteilen am Untergrund, insbesondere an Beton oder Mauerwerk, kommen neben Kunststoff- und Metalldübeln auch gewindeformende Schraubanker zum Einsatz. Bevorzugte Einsatzgebiete sind dabei die Durchsteckmontage oder temporäre Befestigungen, bei denen es auf eine einfache und schnelle Demontierbarkeit ankommt. Die Schraubanker sind formschlüssig im Untergrund verankert, indem sie beim Setzvorgang in der Wandung einer vorbereiteten Aufnahmebohrung ein Gewinde erzeugen. Dazu ist am Schaft eines Schraubankers ein Gewinde vorgesehen, das bei der Rotation des Schraubankers den Untergrund schneidend-fräsend bearbeitet. Die Eigenschaften der bekannten Schraubanker, insbesondere von gewindeformenden Betonschrauben, sind durch den Durchmesser der Bohrung bzw. durch den Schaftdurchmesser, die Flankenhöhe des Gewindes, seine Steilheit und die Setztiefe des Betonankers festgelegt. Die erzielbare Haltekraft ist abhängig von der Setztiefe, dem Durchmesser des Schaftes und der Qualität des Untergrunds, beispielsweise von Beton.

Die Erstellung von Befestigungen mit Schraubankern ist relativ leicht, einfach und schnell durchführbar. Die bekannten Schraubanker müssen jedoch verhältnismässig tief gesetzt werden, damit die geforderten Lastwerte erzielbar sind. Im Vergleich zu einem Hinterschnittsystem nutzen sie die Festigkeit des Betons nur unzureichend aus. Bei geringeren Setztiefen zeigen die bekannten Schraubanker, insbesondere bei dynamischer Belastung, vielfach unbefriedigende Lastwerte. Bei Zugbelastung besteht die Gefahr, dass es infolge der Einleitung von Kraftspitzen im oberflächennahen Bereich des Untergrunds zur Bildung eines oberflächennahen ersten Ausbruchkegels kommt. In weiterer Folge wird der Untergrund entlang der Windungen des Aussengewindes reissverschlussartig abgeschert, bis es zu einem Totalversagen des Schraubankers kommt.

Die US 3,799,229 A zeigt einen selbstsichernden Schraubenanker mit einem zylindrischen Schaft und einem Gewinde, das sich vom freien Vorderende des Schaftes über einen Teil der Längserstreckung des Schaftes erstreckt. Der Schraubanker wird in ein Gegenstück, wie z. B. ein Mutterteil, mit einem Innengewinde eingedreht, wobei das Innengewinde eine konstante Steigung aufweist. Der Abstand zwischen den einzelnen Gewindegängen variiert in einer rhythmischen Weise, so dass sich der eingedrehte Schraubanker zur Schaffung der selbstsichernden Verbindung mit dem Gegenstück verklemmt. Das freie Vorderende des Schaftes weist einen konischen Abschnitt auf, wodurch die vordersten Gewindegänge eine axiale Flankenbreite aufweisen, die mit zunehmendem Abstand vom freien Vorderende des Schaftes derart abnimmt, dass der Abstand zwischen der nachlaufenden und der vorlaufenden Gewindeflanke zweier aufeinanderfolgender Gewindegänge des selben Gewindes nach rückwärts hin zunimmt.

Die US 5,188,496 A zeigt einen selbstschneidenden Schraubenanker mit einem zylindrischen Schaft und einem Gewinde, das sich vom freien Vorderende des Schaftes über einen Teil der Längserstreckung des Schaftes erstreckt. Die Gewindegänge im vorderen Bereich weisen eine grössere Flankenhöhe als die in dem vom freien Vorderende des Schaftes abgewandten Bereich angeordneten Gewindegänge auf, wobei die Flankenhöhe stufenweise abnimmt. Beim Eindrehen des Schraubenanker wird die Flankenhöhe im vordersten Bereich des Schafts bis zur Spitze abgetragen, so dass eine mit zunehmenden Abstand vom freien Vorderende des Schaftes abnehmende axiale Flankenbreite geschaffen wird, wobei im gesetzten Zustand des Schraubenankers der Abstand zwischen der nachlaufenden und der vorlaufenden Gewindeflanke zweier aufeinander folgender Gewindegänge des selben Gewindes nach rückwärts hin zunimmt.

Aufgabe der vorliegenden Erfindung ist es, diesen Nachteilen des Stands der Technik abzuhelfen. Es soll ein Schraubanker, insbesondere ein gewindeformender Betonanker, geschaffen werden, der im Vergleich zu den bekannten Schraubankern ein günstigeres Lastverhalten aufweist. Dabei sollen auch bei geringeren Setztiefen und insbesondere bei dynamischer Belastung die geforderten Lastwerte erzielbar sein.

Die Lösung dieser Aufgaben besteht in einem gewindeforchenden Schraubanker mit den im kennzeichnenden Abschnitt des Patentanspruchs 1 angeführten Merkmalen. Bevorzugte Ausführungsvarianten und/oder Weiterbildungen der Erfindung sind Gegenstand der abhängigen Patentansprüche. Der erfindungsgemässe gewindeformende Schraubanker, insbesondere ein gewindeformender Betonanker, besitzt einen im wesentlichen zylindrischen Schaft mit wenigstens einem, vorzugsweise einstückig mit dem Schaft ausgebildeten, Gewinde, das sich vom freien Vorderende des Schaftes wenigstens über einen Teil der Längserstreckung des Schaftes erstreckt. Die Gewindegänge weisen wenigstens entlang etwa des vordersten Drittels des Schaftes eine axiale Flankenbreite auf, die mit zunehmendem Abstand vom freien Vorderende des Schaftes derart abnimmt, dass der Abstand zwischen zwei aufeinanderfolgenden Gewindeflanken des selben Gewindes nach rückwärts hin zunimmt. Eine im Bereich der Gewindegänge mit abnehmender Flankenbreite an den nachfolgenden Gewindeflanken gemessene Gewindesteigung nimmt mit zunehmendem Abstand sowie ausgehend vom freien Vorderende des Schaftes nach rückwärts linear ab und geht in einen Bereich konstanter Gewindesteigung über.

Durch die erfindungsgemässe Ausbildung des Gewindes wird mit dem Schraubanker ein Lastverhalten erzielt, wie es beispielsweise auch von Hinterschnittsystemen bekannt ist. Als Folge der Gewindeausbildung wird bei Zugbelastung die Last im bohrlochtiefsten Bereich eingeleitet. Dadurch wird bei Belastung die Festigkeit des Betons viel besser ausgenutzt. Die Gewindegänge im oberflächennäheren Bereich üben bei Zugbelastung keine Scherkräfte auf das in die Bohrlochwandung geschnittene Gewinde aus. Dadurch ist die Bildung eines oberflächennahen Ausbruchskegels und von reissverschlussartigen Abschereffekten vermieden.

Damit auch unter ungünstigen Verhältnissen, beispielsweise bei partiellem Betonversagen, sichergestellt ist, dass die Lasteinleitung im wesentlichen im Bohrlochtiefsten erfolgt, weist das Gewinde eine Gewindesteigung auf, die im Bereich der Gewindegänge mit abnehmender Flankenbreite an den rückwärtigen Gewindeflanken gemessen ist und mit zunehmendem Abstand vom freien Vorderende des Schaftes abnimmt. Indem die Gewindesteigung der nachlaufenden Gewindeflanken, ausgehend vom freien Vorderende des Schaftes, nach rückwärts linear abnimmt und in einen Bereich mit konstanter Gewindesteigung übergeht. Dabei erweist es sich als zweckmässig, wenn der Bereich mit konstanter Gewindesteigung etwa 1/3 bis etwa 3/4 der Gewindelänge einnimmt.

In einer vorteilhaften Variante der Erfindung weisen die vom freien Vorderende des Schaftes abgewandten, nachlaufenden Flanken der Gewindegänge von senkrecht zur Schaftachse verlaufenden Bezugsebenen, die durch die Übergänge von den vorlaufenden Gewindeflanken zu den radial am weitesten vom Schaft beabstandeten Bereichen der Gewindegänge verlaufen, einen axialen Abstand auf, der mit zunehmendem Abstand vom freien Vorderende des Schaftes abnimmt. Die im Bereich des freien Vorderendes verlaufenden Gewindegänge weisen eine grössere axiale Flankenbreite auf als die nachfolgenden Gewindegänge. Daher bestimmen die vorderen Gewindegänge die axiale Breite des in den Beton eingeschnittenen Gewindes. Die vordersten Gewindegänge sind somit im wesentlichen vollständig in die von ihnen in den Beton eingeschnittenen Gewindefurchen eingebettet. Die axiale Breite der nachfolgenden Gewindegänge nimmt derart ab, dass zwar die vorlaufenden Gewindeflanken noch in Anlage zu den dem Bohrlochtiefsten näheren Begrenzungsflächen der eingeschnittenen Gewindefurchen sind. Die nachlaufenden Gewindeflanken weisen jedoch mit zunehmendem Abstand vom freien Vorderende des Schaftes einen zunehmenden Abstand von der rückwärtigen Begrenzungsfläche der eingeschnittenen Gewindefurchen auf. Dadurch ist sichergestellt, dass es bei Zugbelastung im oberflächennahen Bereich zu keinerlei Scherbeanspruchung kommt.

Die Materialreduktion am Gewinde kann derart ausgebildet sein, dass die nachlaufenden Gewindeflanken mit der senkrecht zur Achse durch die Gewindegänge verlaufenden Bezugsebene einen Winkel einschliessen, der nach rückwärts hin abnimmt. Aus fertigungstechnischen Gründen ist jedoch eine Ausführungsvariante der Erfindung bevorzugt, bei der die nachlaufenden Gewindeflanken zweier benachbarter Gewindegänge im wesentlichen parallel zueinander verlaufen.

Die Gewindelänge beträgt etwa ein Drittel bis etwa ¾ der Längserstreckung des Schaftes. Durch diese konstruktive Auslegung ist eine Scherbelastung im oberflächennahen Bereich des Untergrunds zuverlässig vermieden.

Durch die erfindungsgemässe Ausbildung des Gewindes verändert sich zwar die an der nachlaufenden Gewindeflanke gemessene Gewindesteigung. Die mittlere Gewindesteigung des Gewindes, die entlang den senkrecht zur Schaftachse verlaufenden und durch die Gewindegänge führenden Bezugsflächen gemessen ist, ist jedoch im wesentlichen über den gesamten Verlauf des Gewindes konstant. In einer vorteilhaften Weiterbildung der Erfindung kann das Gewinde im Bereich der vorderen zwei bis drei Gewindegänge eine grössere mittlere Steigung aufweisen als im übrigen Gewindeabschnitt. Bei der formschlüssigen Verankerung des Schraubankers kommt es dann im Untergrund zu einer geringfügigen Verspannung. Dadurch wird das Rückdrehmoment erhöht, und die Gefahr eines selbsttätigen Lösens des Schraubankers ist verringert.

Im folgenden wird die Erfindung unter Bezugnahme auf ein in den Fig. schematisch dargestelltes Ausführungsbeispiel näher erläutert. Es zeigen:
- Fig. 1: eine teilweise geschnittene Seitenansicht eines Schraubankers; und
- Fig. 2: den vorderen Schaftabschnitt des Schraubankers aus Fig. 1 in vergrössertem Massstab.

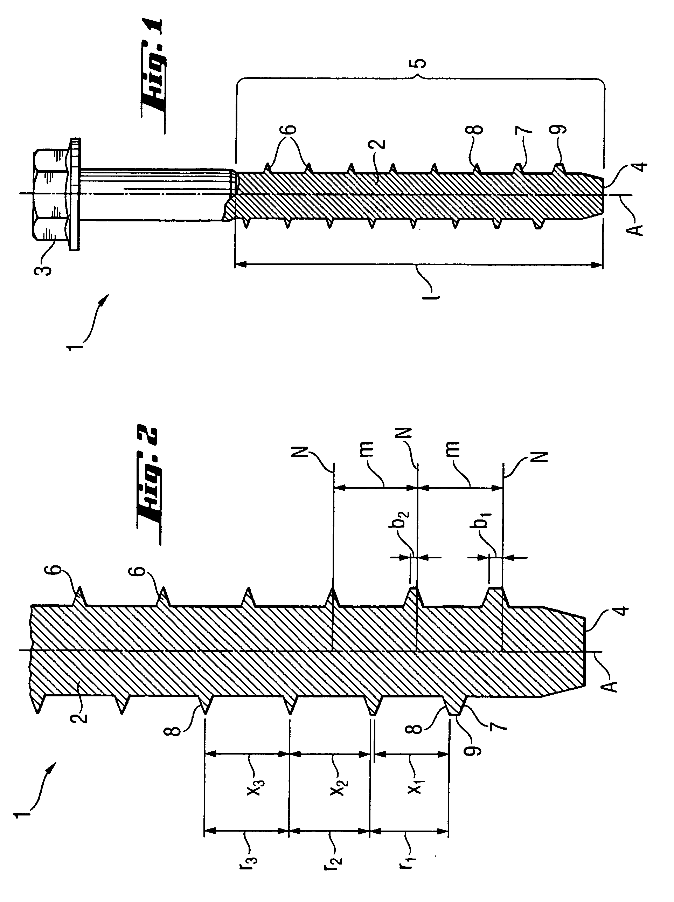

Ein Ausführungsbeispiel des erfindungsgemässen gewindeformenden Schraubankers ist in Fig. 1 und 2 jeweils gesamthaft mit dem Bezugszeichen 1 versehen. Der Schraubanker 1, insbesondere ein Betonanker, umfasst einen zylindrischen Schaft 2 mit einem Schraubenkopf 3, der beispielsweise mit einem Aussensechskant versehen ist. Mit Vorteil besteht wenigstens der Schaft 2 des Schraubankers 1 aus einem gehärteten, rostfreien Stahl. Die Längsachse des Schaftes 2 ist mit A bezeichnet. Der Schaft 2 besitzt einen Verankerungsbereich 5, der sich von einem dem Schraubenkopf 3 gegenüberliegenden, freien Vorderende 4 über etwa 1/3 bis etwa ¾ der Gesamtlänge des Schafts 2 erstreckt. Der Verankerungsbereich 5 ist gemäss dem dargestellten Ausführungsbeispiel mit einem Gewinde versehen, das vorzugsweise einstückig mit dem Schaft 2 ausgebildet ist und dessen Gewindegänge 6 sich schraubenförmig entlang der Längserstreckung I des Verankerungsbereichs 5 erstrecken. In modifizierten Ausführungsvarianten kann der Verankerungsbereich auch zwei oder mehrere Gewinde aufweisen. Jeder Gewindegang 6 besitzt eine dem freien Vorderende 4 des Schaftes 2 zugewandte, vorlaufende Gewindeflanke 7 und eine dem Schraubenkopf 3 zugewandte, nachlaufende Gewindeflanke 8. Der zwischen der vorlaufenden und der nachlaufenden Gwindeflanke 7, 8 liegende axiale Flankenbereich ist mit dem Bezugszeichen 9 versehen.

## Patentansprüche

1. Gewindeformender Schraubanker, insbesondere gewindeformender Betonanker, mit einem im wesentlichen zylindrischen Schaft (2) und wenigstens einem, vorzugsweise einstückig mit dem Schaft (2) ausgebildeten, Gewinde (6), das sich vom freien Vorderende (4) des Schaftes (2) wenigstens über einen Teil (I) der Längserstreckung des Schaftes (2) erstreckt, wobei die Gewindegänge (6) wenigstens etwa entlang des vordersten Drittels des Schaftes (2) eine axiale Flankenbreite (b₁, b₂) aufweisen, die mit zunehmendem Abstand vom freien Vorderende (4) des Schaftes (2) derart abnimmt, dass der Abstand (x₁, x₂, x₃) zwischen der nachlaufenden und der vorlaufenden Gewindeflanke (8, 7) zweier aufeinanderfolgender Gewindegänge (6) des selben Gewindes (6) nach rückwärts hin zunimmt, **dadurch gekennzeichnet, dass**
eine im Bereich der Gewindegänge (6) mit abnehmender Flankenbreite (b₁, b₂) an den nachlaufenden Gewindeflanken (8) gemessene Gewindesteigung (r₁, r₂, r₃) mit zunehmendem Abstand sowie ausgehend vom freien Vorderende (4) des Schaftes (2) nach rückwärts linear abnimmt und in einen Bereich konstanter Gewindesteigung übergeht.

2. Schraubanker nach Anspruch 1, **dadurch gekennzeichnet, dass** die vom freien Vorderende (4) des Schaftes (2) abgewandten, nachlaufenden Flanken (8) der Gewindegänge (6) von Bezugsebenen (N), die senkrecht zur Schaftachse (A) durch die Übergänge von den vorlaufenden Gewindeflanken (7) zu den radial am weitesten vom Schaft (2) beabstandeten Bereichen (9) der Gewindegänge (6) verlaufen, einen axialen Abstand (b₁, b₂) aufweisen, der mit zunehmendem Abstand vom freien Vorderende (4) des Schaftes (2) abnimmt.

3. Schraubanker nach Anspruch 2, **dadurch gekennzeichnet, dass** die nachlaufenden Gewindeflanken (8) zweier benachbarter Gewindegänge (6) des selben Gewindes im wesentlichen parallel zueinander verlaufen.

4. Schraubanker nach Anspruch 1, **dadurch gekennzeichnet, dass** der Bereich mit konstanter Gewindesteigung etwa 1/3 bis etwa 3/4 der Gewindelänge (I) einnimmt.

5. Schraubanker nach einem der vorangehenden Ansprüche, **dadurch gekennzeichnet, dass** die Gewindelänge (I) etwa ein Drittel bis etwa 3/4 der Längserstreckung des Schaftes (2) beträgt.

6. Schraubanker nach einem der vorangehenden Ansprüche, **dadurch gekennzeichnet, dass** das Gewinde (6) im wesentlichen über seinen gesamten Verlauf (5) eine an den Bezugsebenen (N) gemessene, konstante mittlere Steigung (m) aufweist.

7. Schraubanker nach einem der Ansprüche 1 bis 5, **dadurch gekennzeichnet, dass** das Gewinde im Bereich der vorderen zwei bis drei Gewindegänge eine grössere mittlere Steigung aufweist als im übrigen Gewindeabschnitt.

8. Schraubanker nach einem der vorangehenden Ansprüche, **dadurch gekennzeichnet, dass** wenigstens der Schaft (2) aus einem gehärteten, rostfreien Stahl besteht.

## Claims

1. Thread forming anchor bolt, especially a thread forming concrete anchor, having a substantially cylindrical shank (2) and at least one thread (6) which is preferably formed in one piece with the shank (2) and which extends from the free front end (4) of the shank (2) at least along a part (1) of the longitudinal extent of the shank (2), the thread turns (6) along at least about the front third of the shank (2) having an axial flank width (b₁, b₂) which with increasing distance from the free front end (4) of the shank (2) diminishes in such a way that the distance ,(x₁, x₂, x₃) between the trailing and the leading thread flanks (8, 7) of two successive thread turns (6) of the same thread (6) increases towards the rear, **characterised in that** the pitch (r₁, r₂, r₃) measured to the trailing thread flank (8) in the region of the thread turns (6) of diminishing flank width (b₁, b₂), diminishes linearly with increasing distance starting from the free front end (4) of the shank (2) and towards the rear, and transforms into a region of constant pitch.

2. Anchor bolt according to claim 1, **characterised in that** the trailing flanks (8) of the thread turns (6) which face away from the free front end (4) of the shank (2) have an axial spacing (b₁, b₂) from reference planes (N) which extend perpendicularly from the shank axis (A) through the transitions from the leading thread flanks (7) to the regions (9) of the thread turns (6) radially furthest away from the shank (2), the axial spacing (b₁, b₂) diminishing with increasing distance from the free front end (4) of the shank (2).

3. Anchor bolt according to claim 2, **characterised in that** the trailing thread flanks (8) of two neighbouring thread turns (6) of the same thread extend substantially parallel with respect to each other.

4. Anchor bolt according to claim 1, **characterised in that** the region of constant pitch takes up about 1/3 to about 3/4 of the threaded length (1).

5. Anchor bolt according to one of the preceding claims, **characterised in that** the threaded length (1) amounts to about one third to about 3/4 of the longitudinal extent of the shank (2).

6. Anchor bolt according to one of the preceding claims, **characterised in that** the thread (6) along substantially its entire extent (5) has a constant mean pitch (m) measured with respect to the reference planes (N).

7. Anchor bolt according to one of claims 1 to 5, **characterised in that** the thread in the region of the front two to three thread turns has a greater mean pitch than in the remaining threaded section.

8. Anchor bolt according to one of the preceding claims, **characterised in that** at least the shank (2) consists of hardened stainless steel.

## Revendications

1. Vis d'ancrage autotaraudeuse, en particulier vis d'ancrage autotaraudeuse à béton, comprenant une tige sensiblement cylindrique (2) et au moins un filetage (6) qui est conçu de préférence d'un seul tenant avec la tige (2) et qui, à partir de l'extrémité avant libre (4) de la tige (2), s'étend au moins sur une partie (1) de l'extension longitudinale de la tige (2), les spires (6) situées au moins sensiblement sur le tiers le plus antérieur de la tige (2) présentant une largeur axiale de flanc (b₁, b₂) qui diminue en s'éloignant de l'extrémité avant libre (4) de la tige (2), de sorte que la distance (x₁, x₂, x₃) entre les flancs de filet avant et arrière (8, 7) de deux spires successives (6) du même filetage (6) augmente vers l'arrière, **caractérisée en ce que** le pas de filetage (r₁, r₂, r₃) mesuré sur les flancs de filet arrière (8) dans la zone des spires (6) à largeur de flanc décroissante (b₁, b₂) diminue linéairement vers l'arrière en s'éloignant et en partant de l'extrémité avant libre (4) de la tige (2) et se prolonge par une zone à pas de filetage constant.

2. Vis d'ancrage selon la revendication 1, **caractérisée en ce que** les flancs arrière (8) des spires (6) orientés à l'opposé de l'extrémité avant libre (4) de la tige (2) présentent, par rapport à des plans de référence (N) qui, perpendiculairement à l'axe de tige (A), passent par les points de transition entre les flancs de filet avant (7) et les zones (9) des spires (6) les plus éloignées radialement de la tige (2), une distance axiale (b₁, b₂) qui diminue en s'éloignant de l'extrémité avant libre (4) de la tige (2).

3. Vis d'ancrage selon la revendication 2, **caractérisée en ce que** les flancs de filet arrière (8) de deux spires voisines (6) du même filetage sont sensiblement parallèles entre eux.

4. Vis d'ancrage selon la revendication 1, **caractérisée en ce que** la zone à pas de filetage constant occupe environ 1/3 à environ 3/4 de la longueur de filetage (1) .

5. Vis d'ancrage selon une des revendications précédentes, **caractérisée en ce que** la longueur de filetage (1) est égale à environ un tiers à environ 3/4 de l'extension longitudinale de la tige (2).

6. Vis d'ancrage selon une des revendications précédentes, **caractérisée en ce que** le filetage (6) possède, sensiblement sur tout son parcours (5), un pas moyen constant (m) mesuré au niveau des plans de référence (N).

7. Vis d'ancrage selon une des revendications 1 à 5, **caractérisée en ce que**, dans la zone des deux à trois spires avant, le filetage présente un pas moyen plus grand que dans le reste de la portion filetée.

8. Vis d'ancrage selon une des revendications précédentes, **caractérisée en ce qu'**au moins la tige (2) est réalisée en acier trempé inoxydable.
